# EUROPÄISCHE PATENTSCHRIFT

(11) **EP 0 469 414 B1**
(45) Veröffentlichungstag und Bekanntmachung des Hinweises auf die Patenterteilung: **20.03.1996**
(21) Anmeldenummer: 91112163.0
(22) Anmeldetag: 20.07.1991
(51) Int. Cl.: G05B 19/406

(54) **Verfahren zum Vermessen eines Werkzeuges in einer numerisch gesteuerten Bearbeitungsmaschine mit automatischem Werkzeugwechsel und Einrichtung zur Durchführung dieses Verfahrens**
Method for measuring a worktool in a numerical controlled machine tool with automatic tool changer and system therefor
Méthode pour mesurer un outil dans une machine-outil à commande numérique avec changeur d'outils automatique et système pour ceci

(30) Priorität: 25.07.1990 DE 4023581
(43) Veröffentlichungstag der Anmeldung: 05.02.1992
(73) Patentinhaber: Gebr. Heller Maschinenfabrik GmbH, D-72622 Nürtingen (DE)
(72) Erfinder:
(74) Vertreter: Jackisch-Kohl, Anna-Katharina

(56) Entgegenhaltungen:
- EP-A- 0 098 930
- US-A- 4 228 514

## Beschreibung

Die Erfindung betrifft ein Verfahren zum Vermessen eines Werkzeuges in einer numerisch gesteuerten Bearbeitungsmaschine mit einer Wechseleinrichtung nach dem Oberbegriff des Anspruches 1 sowie eine Einrichtung zur Durchführung eines solchen Verfahrens nach dem Oberbegriff des Anspruches 4.

Bei dem bekanntem Verfahren und der bekannten Einrichtung (EP-A2-0 098 930) wird ein einzelnes Werkzeug mittels einer optischen Meßeinrichtung hinsichtlich des Verschleißes gemessen. Die Spitze des Werkzeuges passiert auf dem Zustellweg des Werkzeuges zum Werkstück und/oder auf dem Rückzugsweg vom Werkstück den horizontalen Meßstrahl der Meßeinrichtung. Dabei wird die dem Durchgang der Werkzeugspitze durch den Meßstrahl entsprechende Ist-Stellung mit einer außerhalb der Meßeinrichtung ermittelten Soll-Stellung verglichen. Weist das Werkzeug einen Verschleiß auf, wird durch den Ist-Soll-Wert-Vergleich ein entsprechendes Warnsignal erzeugt. Bei diesem Verfahren und mit dieser Einrichtung wird nur ein Einzelwerkzeug in der Bearbeitungsmaschine vermessen. Bearbeitungsmaschinen benötigen jedoch häufig Mehrspindelköpfe, in die mehrere achsparallele Werkzeuge eingesetzt sind. Die am häufigsten benötigten Mehrspindelköpfe sind so ausgebildet, daß jeweils zwei Werkzeuge in einer gemeinsamen Ebene hintereinander liegen. Beim Verfahren des Mehrspindelkopfes relativ zum zu bearbeitenden Werkstück wird darum meist ein Werkzeug durch das vor ihm liegende verdeckt, so daß der Meßstrahl das dahinter befindliche Werkzeug nicht erfassen kann.

Es ist ferner bekannt (Werkstatt und Betrieb 119 (1986) 3, Seiten 201 und 202), auf einen Mehrspindelkopf eine Sensorleiste aufzusetzen, wobei jedem Werkzeug des Mehrspindelkopfes jeweils ein Sender und ein Empfänger zugeordnet ist.

Der Erfindung liegt die Aufgabe zugrunde, das gattungsgemäße Verfahren und die gattungsgemäße Einrichtung so auszubilden, daß sowohl Einzelwerkzeuge als auch in einfacher Weise möglichst alle achsparallelen Werkzeuge eines Mehrspindelkopfes an einer Bearbeitungsmaschine vermessen werden können.

Diese Aufgabe wird beim gattungsgemäßen Verfahren erfindungsgemäß mit den kennzeichnenden Merkmalen des Anspruches 1 und bei der gattungsgemäßen Einrichtung erfindungsgemäß mit den kennzeichnenden Merkmalen des Anspruches 4 gelöst.

Beim erfindungsgemäßen Verfahren und der erfindungsgemäßen Einrichtung wird der Meßstrahl unter einem spitzen Winkel zu den Achsen des X-Y-Koordinatensystems der Bearbeitungsmaschine gerichtet. Dadurch können sämtliche achsparallelen Werkzeuge der am meisten vorkommenden Mehrspindelköpfe mit nur einem einzigen Meßstrahl erfaßt und vermessen werden. Der Mehrspindelkopf wird hierbei gegenüber dem ortsfesten Meßstrahl in der gewünschten Richtung gesteuert verfahren, so daß nacheinander die einzelnen Werkzeuge des Mehrspindelkopfes in den Meßstrahl gelangen. Auch wenn zwei Werkzeuge des Mehrspindelkopfes in einer gemeinsamen horizontalen oder vertikalen Ebene hintereinander liegen, wird infolge der zu den Achsen des X-Y-Koordinatensystems geneigten Lage des Meßstrahles jedes Werkzeug erfaßt. Somit kann in konstruktiv sehr einfacher Weise jedes Werkzeug der am meisten vorkommenden Mehrspindelköpfe vor oder aber auch nach dem Einsatz des Werkzeuges überprüft und kontrolliert werden. Weist ein Werkzeug einen Verschleiß auf, dann ragt es in der jeweils vorgegebenen Meßposition des Mehrspindelkopfes nicht mehr in den Meßstrahl, so daß er durch das Werkzeug nicht mehr unterbrochen wird. Der auf den Empfänger fallende Meßstrahl erzeugt ein entsprechendes Meßsignal. Auch kann durch diesen einzigen Meßstrahl überprüft werden, ob das bezüglich seiner Länge richtige Werkzeug eingewechselt ist. Die Meßlage des Mehrspindelkopfes ist vorprogrammiert und auf die richtige Werkzeuglänge abgestimmt. Befindet sich nun versehentlich ein zu kurzes oder zu langes Werkzeug im Mehrspindelkopf, dann unterbricht das zu lange Werkzeug in der Meßposition des Mehrspindelkopfes den Meßstrahl zu früh, ein zu kurzes Werkzeug überhaupt nicht. Dabei wird ein entsprechendes Signal erzeugt. Somit ist in sehr einfacher Weise eine umfassende Prüfung sämtlicher Werkzeuge eines Mehrspindelkopfes mit nur einem Meßstrahl möglich.

Weitere Merkmale der Erfindung ergeben sich aus den weiteren Ansprüchen.
Die Erfindung wird anhand eines in den Zeichnungen dargestellten Ausführungsbeispieles näher erläutert. Es zeigen
- Fig. 1: eine Teildraufsicht auf eine Werkzeugmaschine mit einer erfindungsgemäßen Einrichtung zum Vermessen der Werkzeuge,
- Fig. 2: eine Teilvorderansicht der Werkzeugmaschine gemäß Fig. 1 mit der erfindungsgemäßen Einrichtung,
- Fig. 3: in schematischer Darstellung das Meßverfahren an einem Mehrspindelkopf mit sechs Spindeln,
- Fig. 4: das erfindungsgemäße Meßverfahren an einem Mehrspindelkopf mit vier Spindeln.

Mit dem im folgenden zu beschreibenden Meßverfahren und der Meßeinrichtung ist es möglich, mit nur einem einzigen Meßstrahl mehrere Werkzeuge an einem Mehrspindelkopf zu erfassen. Mit der Meßeinrichtung ist eine Kontrolle auf Bruch jedes Werkzeuges möglich. Auch kann hierbei festgestellt werden, ob die bezüglich ihrer Länge richtigen Werkzeuge in dem Mehrspindelkopf vorhanden sind.

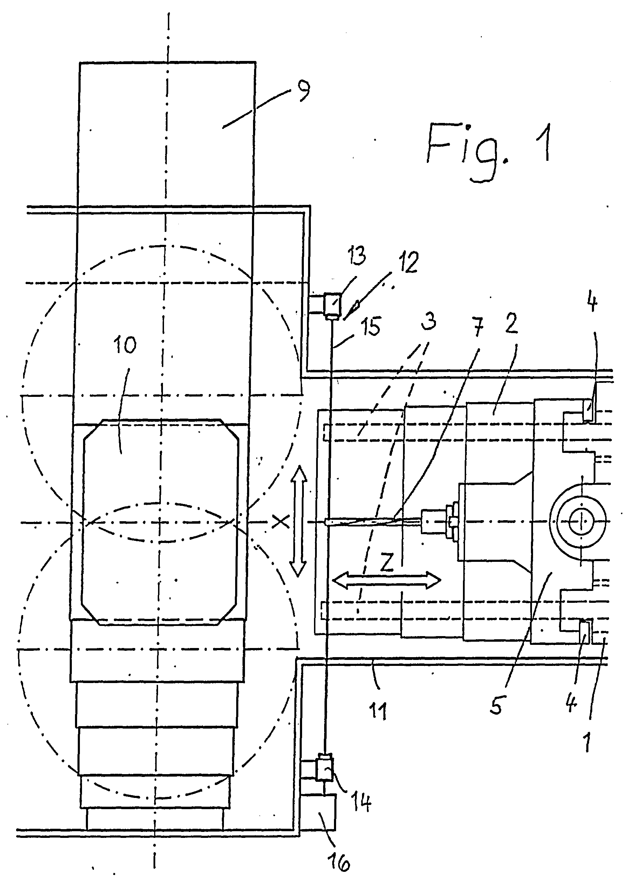

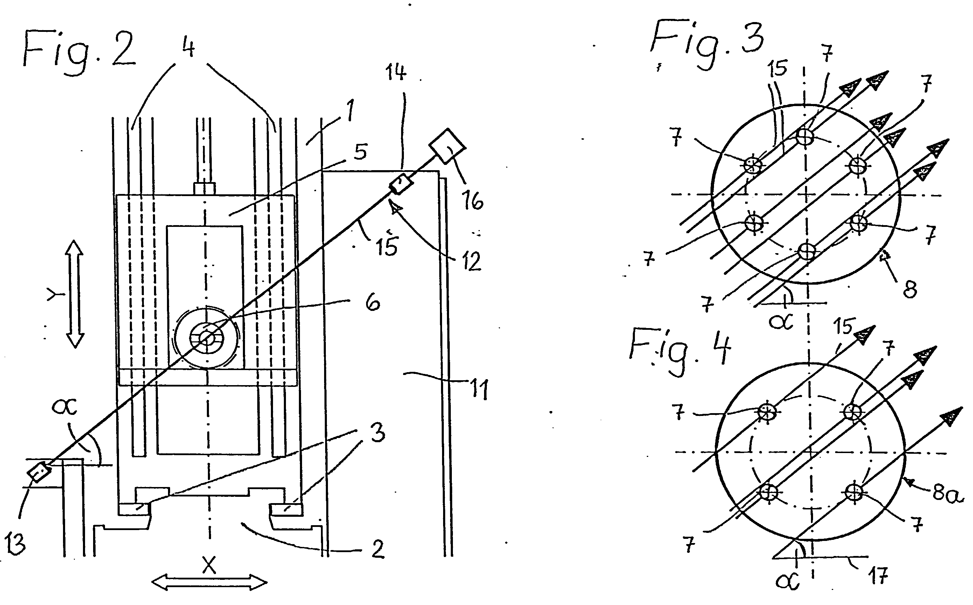

Die in den Fig. 1 und 2 dargestellte Bearbeitungsmaschine hat einen Ständer 1, der auf einem Maschinenbett 2 längs Führungen 3 in Z-Richtung verfahrbar ist. Der Ständer 1 ist an seiner Stirnseite mit vertikalen Führungen 4 versehen, längs denen eine Schlitteneinheit 5 in Y-Richtung vertikal verfahrbar ist. Die Schlitteneinheit 5 weist eine Arbeitsspindel 6 auf, mit der ein Werkzeug 7 drehbar angetrieben werden kann. Die Schlitteneinheit 5 ist so ausgebildet, daß an sie außer Einzelwerkzeuge auch Mehrspindelköpfe 8 bzw. 8a (Fig. 3 und 4) angeschlossen werden können. In den Fig. 1 und 2 ist nur ein einzelnes Werkzeug dargestellt, um das Meßprinzip anschaulich beschreiben zu können.

Vor dem Maschinenbett 2 befindet sich ein Bett 9, auf dem ein Arbeitstisch 10, der beispielsweise ein Schalt- oder ein Rundtisch sein kann, senkrecht zu den Führungen 3 in X-Richtung horizontal verstellbar ist. Auf dem Arbeitstisch 10 wird in bekannter Weise das mit dem Werkzeug 7 zu bearbeitende Werkstück eingespannt.

Die beschriebene Bearbeitungsmaschine ist eine CNC-Maschine, bei der der Ständer 1 mit der Schlitteneinheit 5 in Z-Richtung gegen das Werkstück horizontal verfahrbar ist. Die Schlitteneinheit 5 selbst ist senkrecht hierzu in Höhenrichtung (Y-Richtung) verfahrbar, während der Arbeitstisch 10 mit dem aufgespannten Werkstück senkrecht zur Z-Richtung in X-Richtung verstellbar ist. Die Bearbeitungsmaschine ist teilweise durch eine Verkleidung 11 abgedeckt.

Die Bearbeitungsmaschine ist mit einer Meßeinrichtung 12 ausgerüstet, die einen Sender 13 und einen Empfänger 14 aufweist. Der Empfänger 14 fängt den vom Sender 13 ausgesandten Meßstrahl 15 auf. Der Empfänger 14 ist an eine Auswerteschaltung 16 angeschlossen, an welche der Empfänger 14 ein entsprechendes Signal abgibt.

Als Sender 13 kann jeder herkömmliche Sender verwendet werden, der einen Meßstrahl aussendet, beispielsweise einen Lichtstrahl, einen Infrarotstrahl, einen Laserstrahl oder dgl. Der Empfänger 14 ist auf den jeweils verwendeten Meßstrahl 15 abgestimmt. Derartige Meßeinrichtungen 12 sind an sich bekannt.

Zunächst wird die Schlitteneinheit 5 in Y-Richtung auf die dem zu prüfenden Werkzeug 7 entsprechende Höhe eingestellt, so daß sich die Werkzeugachse und die Meßstrahlachse schneiden. Dann wird der Ständer 1 in Z-Richtung auf Werkzeuglängen-Prüfposition (Meßposition) verfahren. Dieser Ablauf wird für jedes Werkzeug 7 eines Mehrspindelkopfes wiederholt. Der Ständer 1 und/oder die Schlitteneinheit 5 werden je nach eingesetztem Werkzeug 7 rechnergesteuert automatisch in die erforderliche Meßpostion gefahren. Ist das Werkzeug 7 nicht beschädigt und/oder ist das richtige Werkzeug eingewechselt, dann unterbricht die Spitze des Werkzeuges 7 in der programmierten Meßstellung den Meßstrahl 15, so daß auf den Empfänger 14 kein Meßstrahl fällt. Ist das Werkzeug 7 beschädigt oder ist ein zu kurzes Werkzeug in die Bearbeitungsmaschine eingewechselt worden, dann unterbricht das Werkzeug in der vorgegebenen Meßposition des Ständers 1 und/oder der Schlitteneinheit 5 den Meßstrahl 15 nicht, so daß er auf den Empfänger 14 fällt. Er gibt dann ein entsprechendes Signal an die Auswerteschaltung 16 ab. Sie kann dann beispielsweise ein Störsignal erzeugen oder auch selbsttätig einen Auswechselvorgang dieses Werkzeuges durch ein entsprechendes Ausgangssignal einleiten oder die Bearbeitungsmaschine abschalten.

Wird ein zu langes Werkzeug eingewechselt, so wird der Meßstrahl 15 bereits vor Einreichen der programmierten Meßstellung von dem Werkzeug 7 unterbrochen und damit von der Meßeinrichtung 12 erkannt.

Bei einem Mehrspindelkopf, wie er in den Fig. 3 und 4 beispielhaft gezeigt ist, sind mehrere Werkzeuge in die jeweiligen Spindeln eingesetzt. Beim Mehrspindelkopf 8 gemäß Fig. 3 lassen sich insgesamt sechs Werkzeuge einsetzen. Sie liegen in den Ecken eines regelmäßigen Sechseckes. Somit liegen jeweils zwei der Werkzeuge in einer gemeinsamen horizontalen Ebene hintereinander. Dennoch ist es mit der Meßeinrichtung 12 möglich, mit nur einem einzigen Meßstrahl 15 sämtliche Werkzeuge des Mehrspindelkopfes 8 zu überprüfen. Hierzu wird der Meßstrahl 15 unter einem Winkel α zum X-Y-Koordinatensystem der Bearbeitungsmaschine, im dargestellten Ausführungsbeispiel zur Horizontalen 17 vorgesehen. Der spitze Winkel α ist vorteilhaft ungleich 45° oder 30°. Dadurch kann der Meßstrahl 15 sämtliche Werkzeuge 7 des Werkspindelkopfes 8 erfassen. In Fig. 3 sind insgesamt sechs Meßstrahlen 15 zur Verdeutlichung eingezeichnet; tatsächlich steht aber die Meßeinrichtung 12 still; es wird lediglich die Schlitteneinheit 5 so verstellt, daß nacheinander sämtliche Werkzeuge 7 beim jeweils anschließenden Vorfahren des Ständers 1 in den Meßstrahl 15 gelangen. Da der Meßwinkel α ungleich 30° oder 45° ist, wird bei diesem Mehrspindelkopf 8 sichergestellt, daß sämtliche Werkzeuge 7 durch den Meßstrahl 15 erfaßt werden können, obwohl stets zwei Werkzeuge 7 in gemeinsamen Ebenen hintereinander angeordnet sind. Bei der sechseckigen Anordnung der Werkzeuge 7 gemäß Fig. 3 liegen jeweils zwei Werkzeuge in zwei parallel zueinander liegenden Horizontalebenen oder in drei parallel zueinander liegenden Vertikalebenen oder in drei einander kreuzenden schrägen Ebenen. Die Bearbeitungsmaschine ist so programmiert, daß nach dem Einwechseln des Mehrspindelkopfes 8 oder nach der Bearbeitung automatisch für die sechs Werkzeuge 7 die erforderlichen Meßpositonen angefahren werden. Sollte eines der Werkzeuge 7 beschädigt oder ein falsches Werkzeug sein, unterbricht es den Meßstrahl 15 nicht oder zu früh, so daß der Empfänger 14 ein entsprechendes Signal an die Auswerteschaltung 16 gibt. Auf diese Weise kann mit nur einer einzigen Meßeinrichtung mit nur einem Meßstrahl nicht nur ein Einzelwerkzeug, sondern auch zuverlässig eine Vielzahl von Werkzeugen eines Mehrspindelkopfes überprüft werden.

Beim Mehrspindelkopf 8a gemäß Fig. 4 sind vier horizontal angeordnete Werkzeuge 7 vorgesehen, die in den Ecken eines Quadrates liegen. Auch hier liegen jeweils zwei Werkzeuge in zueinander parallelen horizontalen oder vertikalen Ebenen oder in einer schrägen Ebenen hintereinander. Dennoch kann mit dem einzigen Meßstrahl 15 jedes Werkzeug 7 überprüft werden. Der Meßstrahl 15 verläuft wiederum unter dem spitzen Winkel α zur Horizontalen 17 und ist vorteilhaft ungleich 30° und/oder 45°. Dadurch kann wiederum mit dem einzigen Meßstrahl 15 jedes Werkzeug 7 des Mehrspindelkopfes 8a erfaßt und überprüft werden. Auch hier ist die Bearbeitungsmaschine so programmiert, daß nach dem Einwechseln des Mehrspindelkopfes 8a und/oder nach jeder Bearbeitungsoperation die erforderlichen Meßpositionen für die Werkzeuge 7 automatisch angefahren werden.

Der Winkel α ist so gewählt, daß die geläufigen Mehrspindelköpfe mit nur einem einzigen Meßstrahl 15 kontrolliert werden können. Es sind darum keine zusätzlichen Meßeinrichtungen erforderlich, so daß die mit einer solchen Meßeinrichtung 12 ausgestattete Bearbeitungsmaschine einen einfachen Aufbau hat und kostengünstig in der Anschaffung ist. Da der Mehrspindelkopf 8, 8a über den Ständer 1 und die Schlitteneinheit 5 in Y- und in Z-Richtung verfahren werden kann, läßt sich die Meßeinrichtung 12 ortsfest neben der Maschine oder auch an der Maschine vorsehen. Infolge des schräg zur Horizontalen verlaufenden Meßstrahles 15 lassen sich auch Mehrspindelköpfe kontrollieren, die eine andere Zahl von Spindeln haben als die beispielhaft in den Fig. 3 und 4 dargestellten Mehrspindelköpfe.

Mit der Meßeinrichtung 12 lassen sich die Werkzeuge einfach vor jedem Zustellen des entsprechenden Werkzeuges zum Werkstück, aber auch nach einer Bearbeitungsoperation, überprüfen.

## Patentansprüche

1. Verfahren zum Vermessen eines Werkzeuges (7) in einer numerisch gesteuerten Bearbeitungsmaschine mit einer Wechseleinrichtung zum automatischen Ein- und Auswechseln von Werkzeugen (7) in eine Arbeitsspindel (6), bei dem das zu vermessende Werkzeug (7) in eine vorgegebene Meßlage verfahren wird, in der es einen Meßstrahl (15) einer Meßeinrichtung (12) unterbricht,
dadurch gekennzeichnet, daß die Werkzeuge (7) achsparallel an einem durch die Arbeitsspindel (6) antreibbaren Mehrspindelkopf (8, 8a) vorgesehen sind, der so verfahren wird, daß einzeln nacheinander die Werkzeuge (7) in den ortsfesten Meßstrahl (15) gebracht werden, der unter einem spitzen Winkel (α) zu den Achsen des X-Y-Koordinatensystems der Bearbeitungsmaschine gerichtet ist.

2. Verfahren nach Anspruch 1,
dadurch gekennzeichnet, daß der Meßstrahl (15) bei ordnungsgemäßer Ausbildung und /oder Anordnung der Werkzeuge (7) durch das jeweilige Werkzeug (7) unterbrochen wird.

3. Verfahren nach Anspruch 1 oder 2,
dadurch gekennzeichnet, daß der Meßstrahl (15) unter einem Winkel (α) abweichend von 30° und/oder 45° ausgerichtet wird.

4. Einrichtung zur Durchführung des Verfahrens nach einem der Ansprüche 1 bis 3, mit einem Spindelkopf einer Bearbeitungsmaschine, der in zwei zueinander senkrechten Richtungen in Y- und in Z-Richtung verstellbar ist, sowie mit einem Sender (13) und einem im Strahlbereich des Senders (13) liegenden Empfänger (14),
dadurch gekennzeichnet, daß der Spindelkopf ein Mehrspindelkopf (8, 8a) ist, der mehrere achsparallele Werkzeuge (7) trägt, und daß der vom Sender (13) ausgesandte Meßstrahl (15) unter einem spitzen Winkel (α) zu den Achsen des X-Y-Koordinatensystems der Bearbeitungsmaschine verläuft.

5. Einrichtung nach Anspruch 4,
dadurch gekennzeichnet, daß der Sender (13) und der Empfänger (14) ortsfest angeordnet sind.

6. Einrichtung nach Anspruch 4 oder 5,
dadurch gekennzeichnet, daß der Mehrspindelkopf (8, 8a) an einem Z- oder in Y-Richtung verfahrbaren Ständer (1) der Bearbeitungsmaschine vorgesehen ist.

7. Einrichtung nach einem der Ansprüche 4 bis 6,
dadurch gekennzeichnet, daß der Mehrspindelkopf (8, 8a) in Y- oder Z-Richtung, vorzugsweise mit einer Schlitteneinheit (5), verstellbar ist.

8. Einrichtung nach einem der Ansprüche 4 bis 7,
dadurch gekennzeichnet, daß der Meßstrahl (15) unter einem Winkel (α) abweichend von 30° und/oder 45° ausgerichtet ist.

9. Einrichtung nach einem der Ansprüche 4 bis 8,
dadurch gekennzeichnet, daß der Sender (13) ein Infrarot-, Licht- oder Laser-Sender ist.

10. Einrichtung nach einem der Ansprüche 4 bis 9,
dadurch gekennzeichnet, daß der Empfänger (14) an eine Auswerteschaltung (16) angeschlossen ist.

11. Einrichtung nach einem der Ansprüche 4 bis 10,
dadurch gekennzeichnet, daß die Bearbeitungsmaschine eine CNC-Maschine ist.

12. Einrichtung nach einem der Ansprüche 4 bis 11,
dadurch gekennzeichnet, daß der Mehrspindelkopf (8, 8a) in programmierte Meßlagen für seine Werkzeuge (7) verstellbar ist.

## Claims

1. A method for measuring a tool (7) in a numerically controlled machine tool with a changing device for automatic changing and replacing of tools (7) in a main spindle (6), during which method the tool (7) to be measured is conveyed into a predetermined measuring position in which it interrupts a measuring beam (15) of a measuring device (12), **characterised in that** the tools (7) are provided parallel to the axis on a multiple spindle head (8, 8a) drivable by the main spindle (6) and conveyed in such a manner that the tools (7) are moved individually and in succession into the stationary measuring beam (15) which is directed at an acute angle (α) to the axes of the x-y co-ordinate system of the machine tool.

2. A method according to Claim 1, **characterised in that** when the shape and/ or arrangement of the tools (7) is correct, the measuring beam (15) is interrupted by the respective tool (7).

3. A method according to Claim 1 or 2, **characterised in that** the measuring beam (15) is directed so as to deviate at an angle (α) of 30 ° and/ or 45 ° .

4. A device for performing the method according to any one of Claims 1 to 3 and having a machine-tool spindle head displaceable in two directions perpendicular to each other in the Y and Z direction, and having a transmitter (13) and a receiver (14) located in the beam area of the transmitter (13), **characterised in that** the spindle head is a multiple spindle head (8, 8a) which supports a plurality of tools (7) parallel to the axis, and the measuring beam (15) emitted by the transmitter (13) extends at an acute angle (α) to the axes of the x-y co-ordinate system of the machine tool.

5. A device according to Claim 4, **characterised in that** the transmitter (13) and the receiver (14) are arranged so as to be stationary.

6. A device according to Claim 4 or 5, **characterised in that** the multiple spindle head (8, 8a) is provided on an upright (1) - displaceable in the z or y direction - of the machine tool.

7. A device according to any one of Claims 4 to 6, **characterised in that** the multiple spindle head (8, 8a) is displaceable in the Y or Z direction preferably by a slide (5).

8. A device according to any one of the Claims 4 to 7, **characterised in that** the measuring beam (15) is directed so as to deviate at an angle (α) of 30 ° and/ or 45 °.

9. A device according to any one of the Claims 4 to 8, **characterised in that** the transmitter (13) is an infra-red, light or laser transmitter (16).

10. A device according to any one of the Claims 4 to 9, **characterised in that** the receiver (14) is connected to an evaluation circuit (16).

11. A device according to any one of the Claims 4 to 10, **characterised in that** machine tool is a CNC machine.

12. A device according to any one of the Claims 4 to 11, **characterised in that** the multiple spindle head (8, 8a) is displaceable into programmed measuring positions for the tools (7) thereof.

## Revendications

1. Procédé pour la mesure d'un outil (7) dans une machine d'usinage commandée numériquement, comprenant un agencement de changement pour l'entrée et la sortie par changement automatique d'outils (7) dans une broche de travail (6), lors duquel, l'outil (7) à mesurer est déplacé dans une situation de mesure préallouée, dans laquelle, il interrompt un rayon de mesure (15) d'un agencement de mesure (12),
caractérisé en ce que les outils (7) sont prévus, avec des axes parallèles à une tête à plusieurs broches (8, 8a) susceptibles d'être entraînés par la broche de travail (6), cette tête à plusieurs broches étant ainsi déplacée, qu'individuellement, l'un après l'autre, les outils (7) sont amenés dans le rayon de mesure (15) fixe en emplacement, qui est dirigé sous un angle au sommet (α) par rapport aux axes du système de coordonnées en X et en Y de la machine d'usinage.

2. Procédé selon la revendication 1, caractérisé en ce que le rayon de mesure (15), lors de constitution et/ou agencement des outils (7) appropriés, devient interrompu, chaque fois, par l'outil (7).

3. Procédé selon la revendication 1 ou la revendication 2, caractérisé en ce que le rayon de mesure (15) devient orienté sous un angle (α) s'écartant de 30° et/ou de 45°.

4. Agencement pour la mise en oeuvre du procédé selon une des revendications 1 à 3, comprenant une tête de broche d'une machine d'usinage, qui est susceptible d'être déplacée dans deux directions, perpendiculaires l'une à l'autre, dans une direction Y et une direction Z, ainsi qu'un émetteur (13) et un récepteur (14) se trouvant dans la région de rayonnement de l'émetteur (13),
caractérisé en ce que la tête de broche est une tête à plusieurs broches (8, 8a), qui porte plusieurs outils (7) à axes parallèles, et en ce que le rayon de mesure (15), émis à partir de l'émetteur (13), se propage sous un angle au sommet (α) par rapport aux axes du système de coordonnées en X et en Y de la machine d'usinage.

5. Agencement selon la revendication 4,
caractérisé en ce que l'émetteur (13) et le récepteur (14) sont agencés fixes en emplacement.

6. Agencement selon la revendication 4 ou la revendication 5,
caractérisé en ce que la tête à plusieurs broches (8, 8a) est prévue à un montant (1) de la machine d'usinage, susceptible d'être déplacée dans une direction Z ou dans une direction Y.

7. Agencement selon une des revendications 4 6,
caractérisé en ce que la tête à plusieurs broches (8, 8a) est susceptible d'être déplacée dans une direction Y ou une direction Z, de façon préférée, avec une unité de chariot (5).

8. Agencement selon une des revendications 4 à 7,
caractérisé en ce que le rayon de mesure (15) est orienté sous un angle (α) s'écartant de 30° et/ou de 45°.

9. Agencement selon une des revendication 4 à 8,
caractérisé en ce que l'émetteur (13) est un émetteur d'infrarouge, un émetteur de lumière ou un émetteur de laser.

10. Agencement selon une des revendications 4 à 9,
caractérisé en ce que le récepteur (14) est raccordé à un circuit d'évaluation (16).

11. Agencement selon une des revendications 4 à 10,
caractérisé en ce que la machine d'usinage est une machine à CNC (commande numérique par calculateur).

12. Agencement selon une des revendications 4 à 11,
caractérisé en ce que la tête à plusieurs broches (8, 8a) est susceptible d'être déplacée dans des situations de mesure programmées pour ses outils (7).
